# EUROPEAN PATENT SPECIFICATION

(11) **EP 4 419 975 B1**
(45) Date of publication and mention of the grant of the patent: **11.11.2026**
(21) Application number: 22777295.1
(22) Date of filing: 16.09.2022
(51) Int. Cl.: G05D 1/226, G05D 105/20, G05D 107/13, G05D 109/10, H04W 4/44, G05D 1/698, H04W 12/03, H04W 12/121

(54) **NERVOUS SYSTEM FOR CONNECTED VEHICLES**
VERBUNDENES FAHRZEUGNERVENSYSTEM
SYSTÈME NERVEUX POUR VÉHICULES CONNECTÉS

(30) Priority: 17.09.2021 GB 202113343
(43) Date of publication of application: 28.08.2024
(73) Proprietor: Academy of Robotics, Cardiff CF11 9HB (GB)
(72) Inventor: CHIDZIVA, Pasihapaori, Cardiff CF11 9HB (GB)
(74) Representative: Reddie & Grose LLP
(86) International application number: PCT/GB2022/052357
(87) International publication number: WO 2023/041930

(56) References cited:
- WO-A1-2019/226917
- US-A- 4 818 990
- US-A- 5 015 187
- US-A- 6 108 031
- US-A1- 2016 364 989
- US-A1- 2018 136 644
- OASIS CORPORATION: "UAV Mobile Station Command Center", 4 March 2019 (2019-03-04), XP055973907, Retrieved from the Internet <URL:https://www.youtube.com/watch?v=Ib-_IEBMuIM> [retrieved on 20221024]

## Description

### TECHNICAL FIELD

This application relates to a mobile command hub and a connected vehicle nervous system. In particular, the application relates to an improved system for operating one or more connected autonomous vehicles in line with legislative and performance constraints, as well as with increased safety measures.

### BACKGROUND ART

Autonomy and connectivity in vehicles is still an experimental technology. However this technology needs to be deployed in real world environments, meaning it must adhere to legislative, safety and performance constraints. In particular, autonomous vehicles must meet specific legal requirements to be permitted to operate. Safety, and accurate monitoring and control is also paramount.

Current legal requirements in the United Kingdom require the presence of a skilled operator who can monitor and take over control of the autonomous vehicle either from within or remotely. This is mandated by UK legislation, meaning continuous monitoring of autonomous vehicles must be conducted whilst operating independently on public roads. Many other international markets have similar legislation. One of the safety critical reasons for this current legislative stance is that potential environmental noise, and issues with algorithmic and artificial intelligence (Al) features could mean that objects or obstacles crucial to navigation are undetected.

Standard practice for autonomous and semi-autonomous vehicles is to utilise a sensor suite. The sensor suite may include one or more cameras, LIDAR capabilities and/or other such sensors. This practice further utilises processor stacks to translate the incoming data-streams as provided by semi-autonomous or fully autonomous vehicles into complex navigational commands.

Manually controlled vehicles are also undergoing a paradigm shift towards electric powertrains, digitised control systems, connectivity to other vehicles and cloud data storage services (so called "connected vehicles"), as well as incorporating some autonomous features.

When deploying experimental autonomous vehicle technology and fleet connectivity technology in public areas, entities operating or leasing such technology need to provide maintenance, monitoring and emergency intervention for these systems within a reasonable time-frame. Operators should also be within physical reach of the system(s) to provide staff, toolkits and digital and/or physical upgrades.

The operation of autonomous vehicles is a safety-critical system. Robust two-way data-links and control interfaces with vehicles and monitoring of vehicles is required whilst an autonomous vehicle operates on the road. Reliability, real-time monitoring and fail-safes against the variety of environmental and operational challenges is key to practical large scale applicability of autonomous and/or connected vehicle fleets. Other important considerations for operators of such systems include bandwidth and latency provisions, and maintaining high-speed data connectivity. Cyber security and data-privacy are also of paramount importance. There is an issue with current autonomous vehicles not being secure in the long term to perform Level 4 (autonomous under limited conditions) and Level 5 (autonomous under all conditions) autonomy operations whilst operating on complex real-world roads.

We have appreciated that is would be desirable to provide an improved system for operating connected vehicles, autonomous and semi-autonomous vehicles, with improved safety measures, as well as increased security and functionality.

US 6 108 031 A discloses a steerable motor vehicle is remotely controlled by a human operator at a remote control station with the operator being supplied with three-dimensional realistic visual representations of scenes in the vicinity of the vehicle to allow him to exercise more accurate control of the vehicle taking into account objects and other features occurring in the environment immediately encountered by the vehicle. The vehicle carries two vehicle cameras for binocularly viewing scenes, and the viewed scenes are transmitted by RF communication links to the remote control station where the scenes are recreated on two display screens, forming part of a virtual reality headset worn by the operator, viewed separately by separate eyes of the operator to create a three-dimensional and realistic impression of the scenes seen by the two cameras.

US 4 818 990 A discloses a monitoring system using a unique remotely piloted drone with dual counter rotating propellers and carrying electric field sensing, thermal infra-red imaging, video imaging, acoustic and corona discharge sensing equipment. The compact remotely piloted drone flies along a power corridor and is maintained at a fixed distance from an outer phase conductor using on board electric field detection circuitry, video/infra-red imagery and an RF/laser altimeter. The counter rotating, twin-turbo driven configuration for the propellers mounted on coaxial vertical shafts provides a highly stable platform, unlike conventional manned helicopters presently used for routine right-of-way patrols. Dual, counter-rotating saucer-shaped auxiliary propellers provide a degree of stability far superior to a conventional helicopter, particularly in gusty winds. On board sensors and video cameras would permit electric utilities an economic approach to right-of-way monitoring, inspection of frayed conductors or deteriorated splices through infra-red sensing, detection of cracked insulators through acoustic/corona sensors, monitoring of critical, thermally limiting spans and other monitoring functions.

US 5 015 187 A discloses a remote controlled helicopter having a video radio frequency link to a fixed control location has a video camera with a field of view including the terrain forward of the helicopter, an airspeed display, a relative wind direction indicator, and a pitch indicator. A video monitor at the fixed location displays received video signals of the terrain, airspeed, relative wind direction and pitch permitting control of the helicopter over a radio link from the fixed location to the helicopter. The system provides training, experience, and practice in operation of the helicopter.

WO 2019/226917 A1 discloses a system and method for controlling an unmanned aerial vehicle (UAV) tethered from a mobile platform, the UAV system comprising: a UAV comprising one or more sensors, and one or more propellers; a tether attached to the UAV and to the mobile platform; a digital processing device comprising an operating system configured to perform executable instructions and a memory; and a computer program including instructions executable by the digital processing device to automatically control the UAV relative to the mobile platform comprising: a software module identifying the mobile platform; a software module estimating a real-time state of the mobile platform; and a software module automatically controlling three-dimensional real-time motion of the UAV based on the real-time state estimation of the mobile platform and data collected from the one or more sensors, such that the UAV is maintained at a predetermined position relative to the mobile platform.

US 2016/364989 A1 discloses a base module used to receive and house one or more unmanned aerial vehicles (UAVs) via one or more cavities. The base module receives commands from a manager device and identifies a flight plan that allows a UAV to execute the received commands. The base module transfers the flight plan to the UAV and frees the UAV. Once the UAV returns, the base module once again receives it. The base module then receives sensor data from the UAV from one or more sensors onboard the UAV, and optionally receives additional information describing its flight and identifying success or failure of the flight plan. The base module transmits the sensor data and optionally the additional information to a storage medium locally or remotely accessible by the manager device.

### SUMMARY OF THE INVENTION

The invention is defined by the independent claims, to which reference should now be made. Advantageous features are set out in the dependent claims.

The invention provides a distributed but secure network that is linked to associated computing and control hardware specific for functionalities for connected vehicles and autonomous driving. The invention provides connected pieces of physical infrastructure that are configured with software, hardware and user-interface features for the specific purpose of aiding and monitoring the navigation of autonomous and semi-autonomous vehicles. As well as the mobile command hub, the invention allows transfer of information through distributed but low-energy localised network nodes, which achieve function specific edge computing and data-transfer whilst adhering to constraints of cyber-security and operational robustness. Power management and the use of renewable energy are also provided in the mobile command hub and network nodes of the present invention.

### BRIEF DESCRIPTION OF THE DRAWINGS

Embodiments of the invention will now be described, by way of example only, in relation to the accompanying drawings, in which:
Figure 1A shows a connected vehicle nervous system according to an embodiment of the present invention;
Figure 1B shows a connected vehicle nervous system according to an embodiment of the present invention;
Figure 2 is a block diagram of a mobile command hub according to an embodiment of the present invention;
Figure 3A is a block diagram of an operating system of the mobile command hub in an embodiment of the present invention;
Figure 3B is a flow chart showing the data-transfer protocol/logic of the mobile command hub network infrastructure;
Figure 4A is a block diagram of a network node according to an embodiment of the present invention;
Figure 4B shows an operation flow chat for the network node of Figure 4A;
Figure 5 shows a connected autonomous vehicle that can be controlled by the connected vehicle nervous system of the present invention;
Figure 6 is a schematic diagram of an autonomous driving system that can be used in the connected autonomous vehicle of Figure 5.

### DETAILED DESCRIPTION

A mobile command hub, a network node and a connected vehicle nervous system including the mobile command hub and the network node is provided. The mobile command hub is suitable for controlling one or more connected vehicles, and comprises a processor unit and a data storage unit; a network communication unit for communicating with the one or more connected vehicles and/or one or more network nodes; and one or more control stations configured to remotely control the one or more connected vehicles based on commands input by an operator. The network node is suitable for monitoring one or more connected vehicles, and comprises a first processor unit and a data storage unit; a network infrastructure unit for communicating with the one or more connected vehicles; wherein the data storage unit is configured to store data received by the network infrastructure unit; and the network infrastructure unit is configured to transmit data stored in the data storage unit to the one or more connected vehicles.

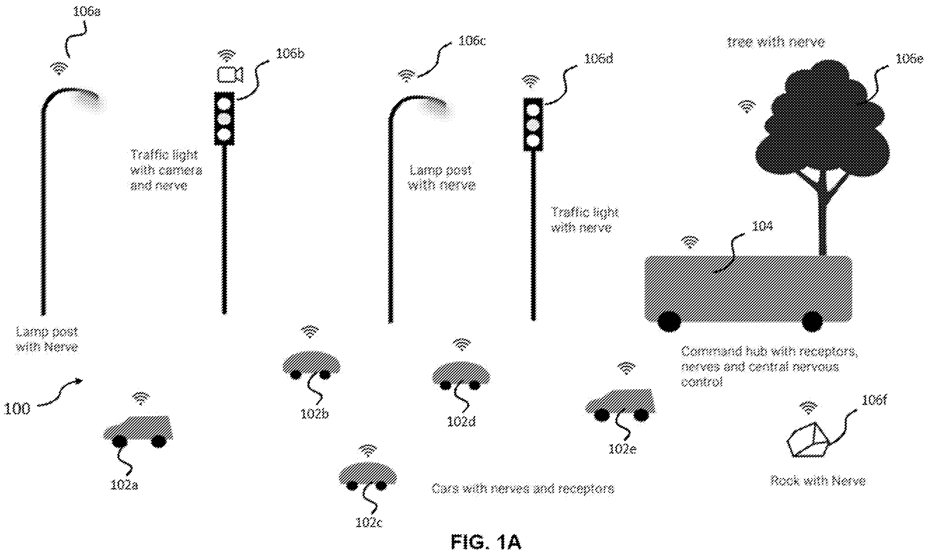

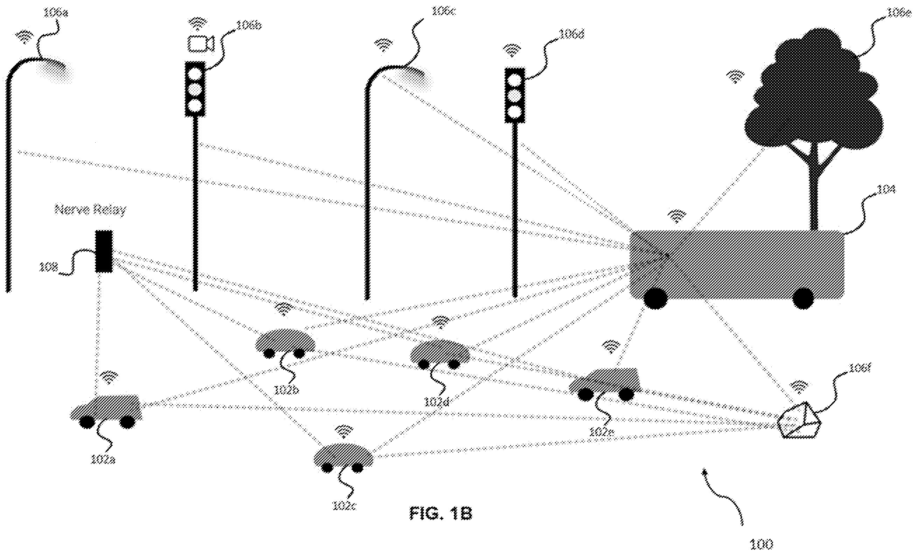

Figures 1A and 1B show a system 100 according to an embodiment of the present invention. The system 100 may be referred to as a connected vehicle nervous system. The connected vehicle nervous system 100 facilitates controlling and monitoring one or more connected vehicles 102a to 102e. Any number of connected vehicles 102 may be monitored and controlled by the system. The one or more connected vehicles 102 will be referred to as one or more Connected Autonomous Vehicles (CAVs) herein, however it is to be understood that the connected vehicles may be any of, or a mixture of: fully autonomous vehicles, semi-autonomous vehicles, or manually controlled vehicles with network connectivity functionality (so called "connected vehicles" or "smart vehicles"). The fleet of autonomous vehicles may include any number of different vehicles, each of different types. For example, some fully autonomous vehicles, some semi-autonomous vehicles and some smart connected manually operated vehicles may be included in the one or more CAVs 102.

The system 100 includes a central mobile command hub 104, also referred to as the Mobile Autonomous & Connected Vehicle Control Hub (MACVCH) herein. The command hub is the "brain" or "central nervous system" of the connected vehicle nervous system. The mobile command hub 104 is in communication with the one or more CAVs 102. The CAVs 102 may therefore be thought of as one or more "nerves" connected to the "brain" of the mobile command hub 104. Any type of communication may be used, however line of sight communication is preferred. Alternatively WiFi may be used instead of line of sight communication, or as a back-up method of communication.

The communication between the CAVs 102 and the mobile command unit 104 communication may be direct communication, or may be indirect communication via one or more network nodes 106a to 106f if these are within communication distance of both the CAV and the mobile command hub 104, or if a chain of communication from the CAV to the mobile command hub 104 via multiple nodes 106 can be formed. The network nodes 106 can be thought of as further "nerves" in the connected vehicle nervous system 100. The network nodes 106 are also referred to herein as Connected Autonomous Vehicle Local Information Nodes (CAVLINs). Each of the CAVs 102, network nodes 106 and mobile command hub 104 form a network ("nervous system"), meaning each component of the system can communicate with any other component that is within communication range. Exemplary active communication paths are shown in Figure 1B, which will be discussed in more detail below.

The mobile command hub 104 is mobile, meaning it has the ability to be move between different locations, allowing the mobile command hub to transfer to different operational zones. For example, in some embodiments the mobile command hub may be built onto the chassis/skeleton of a mid-large sized utility vehicle. In some embodiments the mobile command hub 104 may be any one of a van, a bus, a coach, a truck, a lorry, a trailer such as a towable trailer, or any other custom type of automotive vehicle with adequate physical storage and infrastructure for containing the various sub-systems of the mobile command hub (described in more detail below). Other transportation modes are also possible, such as a boat or train based mobile command hub. In general, any mobile structure that is able to house the various components of the mobile command hub may be used.

The mobile command hub needs to operate continuously in a variety of operation scenarios and therefore preferably has self-reliant power systems. A power management system may be used to ensure continuous operational connectivity to the connected vehicle fleet. In some embodiments renewable energy supplies can be used, for example solar panels or the like. Traditional generators may also be used, as could main power. The mobile command hub also includes processors for various operations, which will be discussed in more detail later.

The CAVs 102 may include one or more sensors, which can be thought of as the "receptors" of the nerves. The sensors allow the CAVs to perceive their surroundings. For example, the CAVs may include any one of cameras, radar sensors, LIDAR sensors, sonar sensors, Global Positioning System (GPS) sensors, inertial measurement units, infrared sensors, or the like. The CAVs can communicate any information sensors by the sensors back to the mobile command hub. For example, if a CAV captures an image of a blocked in a road, this can be communicated to the mobile command hub 104. As another example, if the CAV detects a loss of traction under one wheel, due to an oil spill or the like, this can be reported back to the mobile command hub.

As well as communication with the mobile command hub 104, each CAV can communicate with nearby network nodes 106. The network nodes may be very simple, small, low intelligence devices. This means the network nodes 106 can be rapidly and inexpensively mass produced, and also allows the network nodes to be deployed en masse across an area in which the system 100 is operated. As mentioned above, in some embodiments the network nodes 106 can act as a communication links between the CAVs 102 and the mobile command unit 104. However, typically the network nodes may communicate with the CAVs independently of the mobile command hub 104. For example the network nodes 106 can communicate with nearby cars performing a handshake operation or the like. In other words, whenever a CAV 102 passes one of the network nodes 106 the CAV and network node may briefly communicate. Again this is preferably via line of sight communication, or WiFi, however other communication methods may be used. This communication can have various different purposes.

Firstly, the communication may be intended to help the car identify or verify its location. For example, the network node 106 may tell the CAV 102 distance and bearing from the network node when the CAV is nearby. This can allow the CAV to pinpoint its location, especially if it is in communication with more than one network node 106. This functionality can be useful if other positioning systems, such as GPS, are unavailable. GPS is often inaccurate or unreliable in city centres where multiple tall buildings are present. Line of sight is particularly beneficial in such circumstances. Moreover, in some specific use cases of the connected vehicle nervous system, the one or more CAVs 102 may be able to navigate solely via these locating communications with the network nodes. For example in a warehouse setting or the like, where obstacles are fixed and known, a CAV could navigate and drive autonomously without any image detection by a camera or the like, purely through the locating communications with the network nodes 106. The network nodes 106 may therefore be thought of as location beacons for the CAVs 102. In other embodiments, these brief communications with the network nodes 106 may be used to supplement autonomous driving of a CAV using sensor data, such as a video feed recorded by the CAV.

Alternately or additionally, the network nodes 106 are able to receive information from the CAVs 102, such as the presence of a detected obstacle, or patch of oil causing loss of traction. As mentioned above, the network nodes 106 may communicate this information back to the mobile command hub 104 in some embodiments, especially if it is highly important information, for example a complete blockage of a road or the like. The mobile command hub 104 may then broadcast this information across the connected vehicle nervous system, to alert all CAVs 102. However in some cases, the network node 106 may simply store the information, and report it to all nearby CAVs 102 when they start communication with that network node. This saves the command hub from having to process the data and alert all vehicles for a minor localised issue. Instead the network nodes 106 only alert CAVs within their allotted zone, for example the area defined by its maximum line of sight communication range. Local communication of local issues is therefore possible, and the network nodes 106 may act as a telemetric system. In other words, each of the network nodes 106 can act as a localised information node for passing connected vehicles in the vicinity of the network node.

As mentioned, the network nodes 106 can be very simple and small devices. This has various benefits. Firstly it means the network nodes 106 can be very discrete so they are not spotted by the public when the system is deployed. Moreover, the simple nature of the network nodes 106 mean they can be deployed in many locations. For example, as shown in Figure 1A the network nodes may be deployed in locations such as street lamp, street lights or road signs 106a to 106d, or other locations such as in trees 106e or even in rocks 106f. The latter cases can be particularly helpful in covert deployment, where the operator wishes to prevent detection of the network nodes 106. In additional small simple network node devices are easier to deploy in remote locations that an operator wishes to set up a network in. For example multiple network nodes could be deployed by parachute or the like, to set up the connected vehicle nervous system 100 in a remote location.

In addition, the simple nature of the network nodes means they are more easily compatible with various different CAVs. For example, the network nodes 106 can be simple standardised units that various different vehicle manufacturers and connected vehicle types can connected to, to join the connected vehicle nervous system 100 as additional nerves. In this way, the connected vehicle nervous system 100 can be deployed in public, and various private road users could be allowed to connect and communicate with the network, using various different types and brands of CAV.

Preferably, the network nodes 106 include a self-sufficient power supply, especially when deployed to operate in remote areas. For example the network nodes 106 may include a power storage unit such as a battery. Using a low power device as the network node 106 is therefore beneficial, to prevent rapid power depletion. The power supply may be connected to an energy source, such as a renewal energy source including but not limited to a solar panel. Such as configuration can allow the network nodes 106 to operate self-reliantly in the connected vehicle nervous system 100.

In some embodiments, sensors or "receptors" may be included at the network nodes 106. For example, Figure 1A shows a camera located at network node 106b, in this case a traffic light. The sensor may be any of the types listed above in relation to the CAVs. The sensor may supplement any measurements made by sensors in the CAVs, or may replace the sensors in the CAVs entirely. The network node 106b may communicate any information from the sensor to any nearby CAVs, and/or may communicate any information from the sensor to the mobile command hub 104. For example, in one embodiment, a CAV could navigate around an obstacle based on information sent by the network node 106b in relation an image/location of the obstacle captured by the sensor in the network node 106b.

Turning to Figure 1B, a number of communication paths are illustrated using dotted lines. These lines are for exemplary purposes only, and it is to be understood various other communication routes are possible, and some of the communication routes in Figure 1B may not be in use. As can be seen in Figure 1B, the system 100 includes a further network node 108. The network node 108 may perform all the functions of the network nodes 106a to 106f described above, however the network node 108 is a more complex and powerful computing device that can also perform additional functions compared to the network nodes 106. The network node 108 will be referred to as an enhanced network node 108 herein. Preferably, the enhanced network node 108 is connected my mains power or a generator, however a battery and renewable energy configuration may also be used.

The enhanced network node 108 in the embodiment of Figure 1B acts as a relay node, and can therefore also be referred to as a "nerve relay". In other words, the enhanced network node can relay any communication sent via the mobile command hub 104. In particular, if the mobile command hub attempts to send information to a particular CAV, or attempts to broadcast information to various/all CAVs (e.g. an instruction to avoid a particular area), the relay node can receive the information, and then send or broadcast the information onto CAVs which are out of the communication range of the mobile command hub 104. This can be beneficial compared to attempting to communicate via a chain of multiple of the lower power network nodes 106. Typically the enchanted network node 108 will have a higher power and communication range than the smaller network nodes 106.

Additionally or alternatively, the enhanced network node 108 may include additional processors compared to the smaller network nodes 106. The additional processors may be configured for specific complex computing operations, for example processing relating to artificial intelligence (A.I) algorithms or the like. This will be discussed in more detail later.

In general, most network nodes would typically be of the simpler type discussed in relation to Figure 1A (the network nodes 106), and the minority of network nodes would be enhanced network nodes with more computing power, such as the network node 108 of Figure 1B.

In some embodiments, the network nodes 106,108 may operate entirely independently of the mobile command hub 104 as a localized information nodes which solely transmit information back and forth between CAVs that are in range. Although in some embodiments the network nodes may additionally send limited information and logs to the mobile command hub 104, the network nodes do not require the mobile command hub to be present to operate. In other words, the network nodes 106,108 can operate without needing to be able to contact a mobile command hub in the connected vehicle nervous system 100 and can communicate back/forth between CAVs 102 only.

The mobile command hub 104 typically communicates directly with the CAVs 102 and the operator commands from any control stations 208 are sent from command hub 104 directly to the CAVs. The network nodes 106,208 may then be considered as isolated standalone nodes with only short range communication occurring when in connectivity proximity to a passing CAV. Typically communication between such an isolated network node and the mobile command hub is limited to small information byte transfer. In other words, the network nodes may be used mainly for edge processing of information in a localized environment, and communicating that information to passing CAVs 102 for safety warnings and or to supplement perception functions for autonomous driving occurring on the CAVs.

In this way, the network nodes (CAVLINs) can in some embodiments operate entirely independently regardless of the mobile command hub (MACVCH). In this case, the network nodes are simple processing nodes with localised connectivity to provide supplementary information or data-logs from other passing CAVs to a newly arrived CAV or CAVs. When a CAV operates near a network node, it may receive packets which contain information about the environment/traffic and any dynamic scenarios/features specific to the local environment that the network node is deployed in. These network nodes are designed such that they can be produced in scale and deployed with low-maintenance concerns across an operational environment.

In some embodiments, as mentioned above, the enhanced network node 108 may carry out localised A.I processing with its own in-built microchip unit (MCU). The smaller network nodes 106 are typically not designed for high information processing and large rates of data-transfer. For security, it is preferred that the network nodes 106,108 operate independently and transmit and receive mainly/only localised information. The network nodes 106,108 may additionally connect to the mobile command hub 104 to receive updates, additional information, registry upgrades and the like. However, in the smaller network nodes the nature of circuitry is not intended for relaying critical data or high-speed packets (such as vehicle control commands). Instead, the smaller network nodes 106 are distributed independent edge devices which provide additional information about the local environment.

In use, the connected vehicle nervous system 100 allows one or more CAVs 102 to be safely monitored and controlled in line with specific safety and legislative requirements. Communication across the whole network (nervous system) from the mobile command hub provides the means for this monitoring and control. However, localized control and monitoring is also possible via the network nodes. This provides an efficient, adaptable network. Moreover, safety of the connected vehicle nervous system is greatly improved, as each of the network nodes can track the connected vehicles and provide alerts and updates as described above. Furthermore, all of the connected vehicles work together as receptors, by detecting potential issues or hazards in their surroundings, and relaying them around the network. This can warn other vehicles of possible dangers, and is highly efficient due to the localized nature of the communication via the network nodes 106. Centralised human based monitoring and control from the mobile command hub can also be included for additional safety, as will be discussed in more detail below.

As well as improving safety, the adaptability of the connected vehicle nervous system 100 is advantageous. The mobile command hub can be easily transported (e.g. driven) to any desired location where the connected vehicle nervous system is to be set up. This includes remote areas. The small, simple network nodes 106 can be rapidly and inexpensively deployed over the operating zone the network, and can run self-sufficiently once deployed. This reduces the set up time and cost of the network, as well as reducing the ongoing maintenance costs. Additionally, having a mobile system that is deployable and then movable and re-deployable increases the versatility of the network. For example, this may be particularly beneficial during testing and prototyping of new autonomous driving technologies using the connected vehicle nervous system 100, where the system is not intended to be installed permanently.

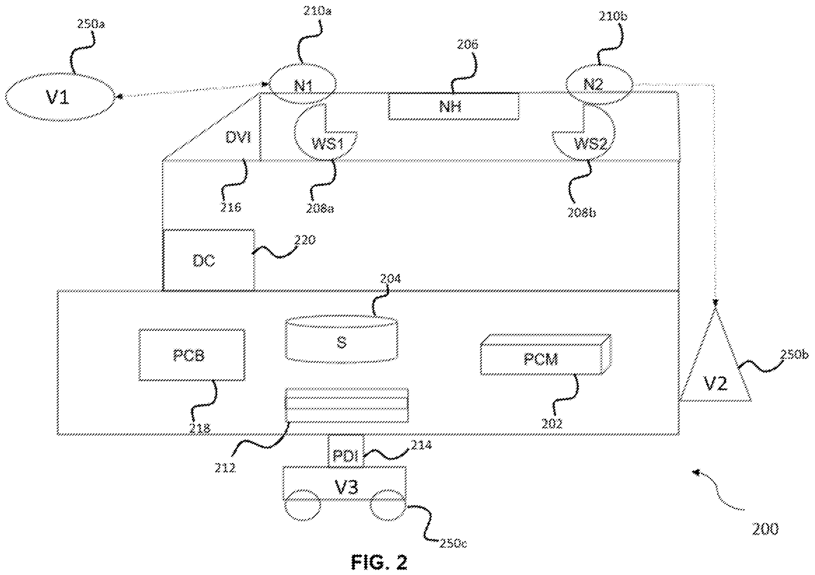

Further advantages of the system 100 will be described in more detail below in relation to Figures 2 to 6, along with specific details of the mobile command hub 104, network nodes 106a to 106f and 108, and the CAVs 102 in particular embodiments.

### Mobile Autonomous & Connected Vehicle Control Hub (MACVCH)

The mobile command hub 104 includes computing infrastructure, network infrastructure, digital/software infrastructure, physical infrastructure and automotive maintenance infrastructure for monitoring and control of autonomous/semi-autonomous vehicles (CAVs 102) operating within a defined zone or within physical proximity to the mobile command hub 104 or network nodes 106. The mobile command hub may be responsible for any of: computing, safety audits, maintenance and general repair/upgrades. In more detail, the computing may include functions such as, but not limited, to training and updating artificial intelligence (A.I) and computer vision modules, storage and data security algorithms, data visualisation, network management, and controlling interfacing in real-time with CAVs remotely. The mobile command hub may include specialised digital, network & computing infrastructure for performing such tasks, which is explained further below. Furthermore, as the operation of a fleet of autonomous vehicles is a security/safety critical field, the mobile command hub 105 and the system 100 as a whole needs to have strict security, data-integrity and privacy compliance features.

An entirely digitised solution is not feasible for the mobile command hub, given the nature of automotive systems with advanced control sub-components. An entirely digitised solution here refers to a mobile command hub with the entirety of its internal circuitry including those for controlling the physical automotive functionalities of the CAVs such as engine ECU, security doors, power-systems, etc. made of digital electronic systems that can be accessed from external sources. A purely digitised system increases risk of cyber-security and data-privacy breaches. Instead, in the present embodiment, security critical components of the CAVs such as those of the engine ECU, entry doors, storage locks are controlled using analogue electronics based in the mobile command unit, that are not as easily susceptible to cyber attacks
Figure 2 shows a block diagram of a mobile command hub 200 according to an embodiment of the present invention. The mobile command hub 200 may be used as the mobile command hub 104 in Figures 1A and 1B.

The mobile command hub 200 includes a main processor (computing) unit 202 (PCM) and a data storage unit 204 (S). Preferably, the possessor unit 202 is capable of large and small volume data processing, as well as upgrading vision/A.I modules of the one or more CAVs 102. The processor unit 204 may be configured to perform training of a neural network and/or updating of an artificial intelligence module operating on at least one of the CAVs.

The mobile command hub further includes a network communication unit 206 (network hub, NH) for communicating with one or more CAVs 102 and/or network nodes 106. The network communication unit 206 can manage data-protocols and material usage of data transmission channels. The network communication unit 206 may use various communication methods, including but not limited to: line of sight communication, 4G, 5G, Wi-Fi, and radio frequency (RF) communication. Line of sight and WiFi are preferred. The network communication unit 206 will be discussed in more detail below.

In some embodiments, the mobile command hub 200 may also include one or more control stations 208a,208b (work stations, WS) configured to remotely control one or more connected vehicles, based on commands input by an operator. In particular, in Figure 2 the control stations 208, 208b are shown connected to a first CAV 250a (V1) and a second CAV 250b (V2) respectively, via a first network link 210a and a network link 210b (N1,N2) provided by the network communication unit 206.

The one or more control stations 208a,208b may be terminals through which the operator can control any CAV in the system. In use, an operator would typically sit at the control station 250 viewing a display screen based on a camera feed received from a particular CAV. The operator can then use the control station 250 to control the CAV remotely. The control station 250 may include a human computer interface graphical user interface (GUI) platform, through which the operator can control the CAV and input commands, to improve the ease of control of the CAV. In other words, GUI dashboards and utilities may be provided for interfacing with CAV operational software. Other control methods such as a joystick, or full driving cockpit simulators, or the like may be used to input control commands to the CAV.

Through the control stations 250, an operator can instantly take over operations of vehicle hardware including but not limited to vehicle: sensors, cameras, actuators (steering, brakes), motors, indicators, headlights, engine control units (ECUs) and other electronically connected components of the CAV. The operator can control each of these components for each CAV from within the control hub. The operator can also input a command to any given CAV, for example, a command to return to the mobile command hub 200, or to travel to a specific location, or the like.

As well as controlling a CAV, an operator can also use the control stations 250 to monitor any CAV, without inputting commands to alter the control of the CAV.

Any control or monitoring of any of the CAVs can be performed live, in real-time via the control stations 250. In this way, the mobile command hub 200 provides a remote cloud based monitoring system, which is deployed within the physical mobile command hub.

Preferably, the mobile command hub 200 includes one or more physical connection interfaces 212 to provide a physical data interface/link 214 (PDI) between a CAV and the mobile command hub 200. For example, Figure 2 shows a third CAV 250c (V3) physically coupled (docked) to a physical connection interface 212. A plurality of physical connection interfaces 212 may be included so that a plurality of CAVs can be coupled to the mobile command unit 200 at the same time. The physical coupling between a CAV and the one of physical connection interfaces 212 may be via a wire, a plug and socket, or the like. The physical connection interface 212 may be a port. In other embodiments, short distance wireless couplings could be used as the physical coupling, such as Bluetooth or the like. Inductive couplings could also be used as the physical coupling.

When a CAV is coupled to a physical connection interface, secure data-transfer between the processor unit 202 and the physically coupled CAV is possible via the physical data interface 214. Electrically power can also be supplied to the CAV via the physical connection interface 212, to charge a power storage unit such as a battery or the like included in the CAV. In other words power charging of the physically coupled CAVs is possible.

The above described configuration allows the CAVs to physically dock or connect through a secure data-transfer interface to the mobile command unit, for critical upgrades and/or power and charging. The physical connection interfaces 212 may also provide a physical docking port for vehicle repair and turnaround. The physical docking port may in some embodiments be a closed space which can fully contain the CAV.

The mobile command unit 200 may further include a display interface 216 (data visualisation interface, DVI) for outputting data stored in the storage unit 204. Preferably, the storage unit 204 is configured to securely store data and operational logs of the one or more CAVs. The operator may use the display interface 216 to view these data and operational logs, or any other information from the CAVs, during their operation, allowing further monitoring of the CAVs. The display interface 216 may also provide live feed and visuals from the CAVs.

Preferably the mobile command hub 200 includes a back-up processor (computing) unit 218 (PCB), which can take over the role of the main processor unit 202 in the case of an outage or the like or the main processor unit. In other words, the back-up processor can run a back-up operating system on the mobile command hub. This can allow the mobile command hub to be parked or stowed in operational areas without constant on-site human presence.

An optional driver cabin 220 is also shown in the mobile command unit 200 of Figure 2. From the cabin 220 the mobile command hub 200 can itself be driven and moved to the desired location. In some embodiments, the mobile command hub 200 may itself be an autonomous or semi-autonomous or connected vehicle.

As security of the mobile command hub 200 is important, a number of security measures can be included in the mobile command hub 200 and system 100 in general. For example, physical security means may be included in the mobile command hub, such as CCTV monitoring, alarm systems, as well as more complex security measures such as auto-detection/intruder detection algorithms. Said intruder detection algorithms may include facial & object detection modules executing in a loop to detect objects such as persons, faces, vehicles within different vicinities, such as the interior of the mobile command hub, or within the outer perimeter. The intruder detection algorithms may also or alternatively include noise/audio/voice detection scripts processing inputs from in-built command hub microphones to detect audio signals when these are not to be expected, for example when the mobile command hub is parked unmanned in remote location etc. The noise/audio/voice detection scripts can act as a failsafe to above mentioned visual intruder detection. Two-factor or multi-factor authentication can also be enforced for any of the components of the mobile command hub 200, as well as encrypted storage of data.

In use, the mobile command hub 200 can monitor and communicate with one or more CAVs connected to the connected vehicle nervous system 100. The mobile command unit can broadcast safety critical messages or the like, optionally via enhanced network nodes such as the network relay 108 of Figure 1B, based on feedback received from the receptors and nerves in the connected vehicle nervous system (i.e. the sensors on the CAVs and/or network nodes). The mobile command hub therefore acts as the central brain of the connected vehicle nervous system 100.

Moreover, the mobile command hub can allow a human operator to control any of the CAVs connected to the connected vehicle nervous system 100. The CAVs may be in communication with control stations 208 in the mobile command hub 200 either directly, or via one or more of the network nodes 106,108. Moreover, the CAVs may also communicate with the network nodes 106,108 independently of the mobile command hub 200. In this way, the system 100 of Figure 1 forms a private network, preferably based on line of sight, which can advantageously be kept separate from any public network such as a public telecommunication network or the internet, which enhances the security of the connected vehicle nervous system 100.

The mobile command hub 200 can allow an operator to remotely monitor one or more autonomous or semi-autonomous vehicles, thus meeting the safety requirements of a publically operated autonomous fleet of vehicles. Moreover, through the physical connection interfaces 212, the operator can maintain, charge and upgrade the CAVs easily and efficiently. This may include updating an A.I module and/or a neural network running on the CAV.

The processor unit 202 may also perform A.I specific processing for the CAVs, helping to spread computational load. For example, the processor unit 200 can perform training of a neural network for use in any of the CAVs, or may assist in any of image classification, image segmentation, and object recognition using a trained neural network, the result of which could be communicated to the one or more CAVs.

Specific computer infrastructure included within the processor unit 202 may include Nvidia CUDA nodes and GPU computing nodes with A.I training and inference software pipelines installed. the computing hardware & servers may be built with suitable auto-grade, vibration proof materials & housing to function in a mobile/moving platform such as the mobile command hub 200.

### Operating system (OS)

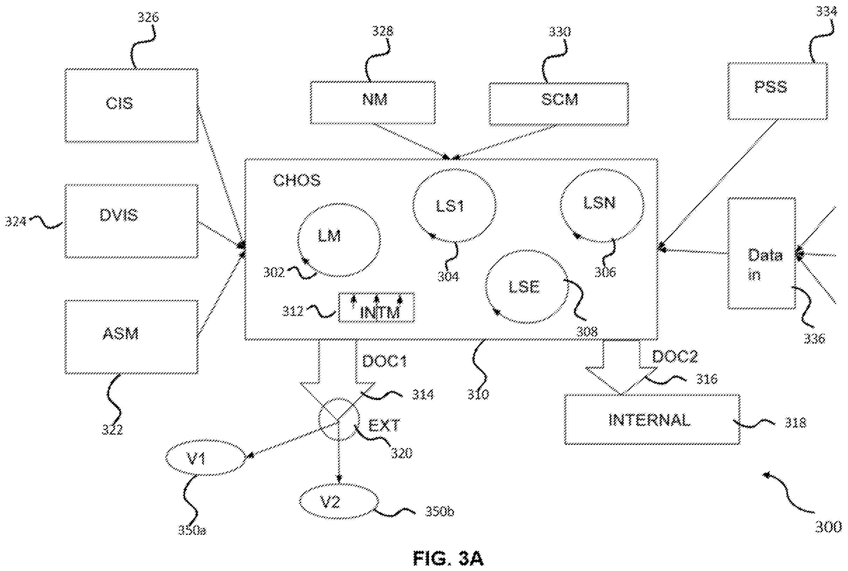

Figure 3A is a block diagram of an operating system 300 of the mobile command hub in an embodiment of the present invention. The operating system 300 can be stored in the storage unit 204 and run on the processor unit 202 or back up processor unit 218.
The operating system 300 includes the following functional elements:
- LM: Main Update Loop/Cycle 302
- LS: Secondary Loop/Cycle 304
- LSN: Nth Secondary Computing Loop/Cycle 306
- LSE: Security and Emergency Cycle 308
- CHOS: Mobile Command Hub (Control Hub) Operating System 310
- IMTM: Interrupt Manager 312
- DOC1: Data Output Channel One 314
- DOC2: Data output Channel two 316
- INTERNAL: Internal Systems 318
- EXT: External Vehicles 320
- ASM: Analogue System Manager 322
- DVIS: Data Visualization Interface Subroutine 324
- CIS: Control Interface Subroutine 326
- NM: Network Managers 328
- SCM: Security and Computing Managers 330
- PSS: Power Systems Subroutine 334
- Data Input 336
- V1, V2: External vehicles 350a 350b

The OS is designed to mitigate the varied operational requirements of managing the internal subsystems, security, data-storage and connectivity/data-transfer to the CAV(s). The OS is designed as an interrupt-triggered asynchronous main-routine with various subroutines and physical system managers interfacing at various points. For redundancy and distributed computing load management, the OS operates multiple execution loops in parallel each with specific functionalities attributed.

The software data transfer protocol operating on the mobile command hub OS includes features such as but not limited to: data-compression, encryption, two-way transfer, and sanity checking.

### LM: Main Update Loop/Cycle

Main update cycle, execution loop. This is the primary computing pipeline and may correspond to the primary processor core/s. There may be N number of subsequent secondary computing loops (LS: Secondary Loop/Cycle, LSN: Nth Secondary Computing Loop/Cycle). The principle behind having multiple computing loops is so that they each operate in different time-frames and processing loads given the variety and nature of computational/processing loads. A single computing loop with associated hardware may not result in a feasible system as the processing requirements for managing the mobile command hub's internal systems differ from CAV data transfer operations.

### LSE: Security and Emergency Cycle

A specifically dedicated computing loop operating on specialized processors for monitoring security and emergency responses. This loop is meant to operate continuously whilst MACVCH is deployed regardless of connectivity.

### IMTM: Interrupt manager

Scans for interrupt signals from various sub-systems and CAVs and triggers associated subroutine & actions. Such a design lowers system power consumption and reduces computational load on the mobile command hub server.

### DOC1: Data Output Channel 1

Output Channel/Bus for external systems, in this case CAVs and/or any external sensor or information nodes.

### DOC2: Data output Channel 2

Output Channel/Bus for internal systems within the MACVCH (mobile command hub 200).

### ASM: Analogue System Manager

Aspect of the software operating on bespoke circuitry attached to relays that control and/or monitor analogue circuits present in the mobile command hub. (This may include a range of components like doors, latches, blinds, engine relays etc.)

### DVIS: Data Visualization Interface Subroutine

For managing output in the visualisation screens and/or mobile command hub audio systems.

### CIS: Control Interface Subroutine

For managing interfacing and data-transfer of human computer interface system (e.g. the control stations 208) on the mobile command hub that outputs action commands that are then transmitted onto the CAV.

### NM: Network Managers

Dedicated software for Network & Connectivity Management.

### SCM: Storage and Computing managers

Aspect of the OS that ensures computing operations relating to the training/optimisation of A.I/Vision & storage/backup of transmitted and received data is performed.

### PSS: Power Systems Subroutine

To monitor and control power/input-output from the mobile command hub such as to ensure continuous operation and data-link is maintained.

### Network communication unit 206

The network infrastructure of the network communication unit 206, particularly the electronic circuitry, data-protocols and material usage of data transmission channels are important to overall system functioning, as these must be such that they ensure minimum latency and integrity of data connection between multiple CAVs. The network infrastructure is responsible for maintaining high-speed data connectivity, as well as managing bandwidth and latency provisions.

The physical network infrastructure and its associated network management software may have the following features:
- The MACVHC (mobile command hub) network has complete fibre optic connectivity to all routers and physical access/output points in the system. Preferably this is single mode type of fibre optic cables to maintain data-integrity and provide maximal speeds and real-time communication of data.
- Specialised materials for electronics and networking to ensure high-speed, low-latency and data integrity. Specifically, the material grade used in the fibre-optic network is preferably of silica or similar. Plastic or similar grade materials may lead to data attenuation and information loss.
- The physical configuration of the network may have clearly separated connector panels/housing, and may deploy high-speed fibre-optic connectors between the fibre-wires and may be wired/assembled in a manner with no cross-coupling and physical breakpoints/bend-points.
- The network infrastructure may have flexible/extendable antennas preferably with automated systems to modify connectivity on-the-go and adjust if lower bandwidth/data-speeds are detected. Moreover the system may have redundancy modes of networking. For example, if the Line of Sight mode doesn't work the system may be able to fall back to Secure 4-G WiFi.

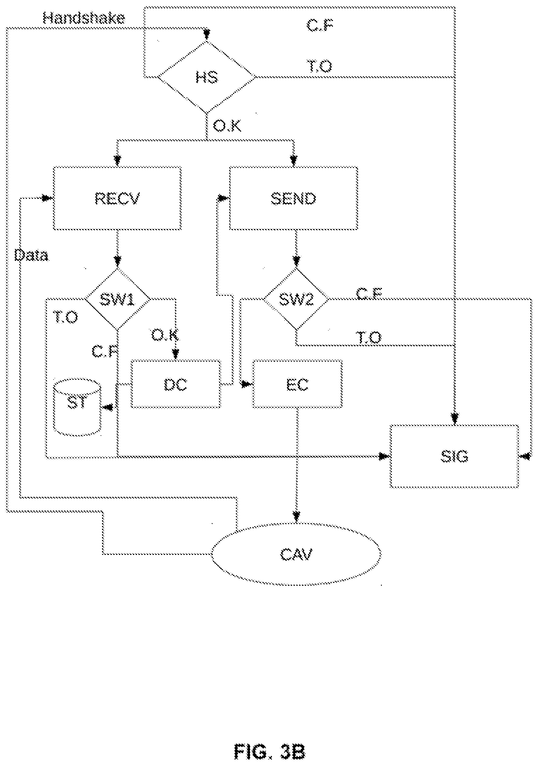

Furthermore the actual protocols of data-transfer between CAV and MACVCH are custom designed to balance latency and data-integrity requirements. Figure 3B is a flow chart showing the data-transfer protocol/logic of the mobile command hub network infrastructure. The functions in Figure 3B are explained below:
T.O: Time Out, if connection times out then a signal is sent to the SIG sub-module.
C.F: Connection Failure, if the security tokens and or data validity checks fail then a signal indicating as such is sent to the SIG sub-module.
O.K: Check Ok
HS: Handshake Selection, before connectivity from a CAV is initialised a handshake check is performed and encryption tokens assigned for the connection session to the CAV & MACVCH (mobile command hub).
SIG: Emergency and Connection Signal sub-module, this transmits emergency and/or log signals & triggers relation operations to maintain operational safety/security in case a packet to be received/sent has timed out or detected to be corrupt. Once Handshake is initialised, Send and Recv modules are activated and operate in parallel, managing data in/out to the CAV.
**SEND:** Sub-Module for sending packets to the CAV.
**RECV:** Sub-Module for receiving packets from the CAV.
**SW1:** Logic switch to check if received operation has timed out, if the received packet is valid and if it can be forwarded to storage and processing.
**SW2:** Logic switch to check if the send operation has timed out, if the packet to be sent is valid and if it can be forwarded on to the CAV.
**ST:** Command Hub Storage.
**DC:** Decryptor & Processor to decrypt, analyse and process the received data packet from the CAV.
**EC:** Applies encryption and packet formatting operations to the data-packet before transmission/send.

A description & format of the custom data-packets that transfer between CAV & MACVH is explained below. There two higher-level packet types Handshake Packet & Data Packet.
**Handshake Packet:** *CAV_REG_TOKEN, MACVCH_REG_TOKEN, SESSION_KEY, PERIODIC_PASSWORD*
*CAV_REG_TOKEN: Registry token (compressed* as > 50 *ASCI CHARACTER, with each CHARACTER encoded* as *1 BYTE) indicating specific make, model and other relevant technical information* of *CAV*
*MACVCH_REG_TOKEN: Registry token (compressed & encrypted* as > 50 *ASCI CHARACTER, with each CHARACTER encoded* as *1 BYTE) indicating specific make, model and other relevant technical information* of *MACVCH*
*SESSION_KEY: UNIQUE REAL-TIME GENERATED SESSION KEY (>* 15 *ASCI CHARACTER) WHICH NEEDS TO BE PRESENT IN EVERY SUBSEQUENT DATA-TRANSFER PACKET FROM CAV & MACVCH*
*PERIODIC_PASSWORD: A periodic password of any length encoding which is available from a centralised registry to both CAV* & *MACVCH and needs to match for hand-shake to be complete. As this password is constantly updated, a malicious user with access to CAV_REG_TOKEN & MACVCH_REG_TOKEN and knowledge of data-protocols may still not be able to access system and initiate HANDSHAKE.*
**Data Packet:** *SESSION_KEY, SYNC_TOKEN, TYPE_BYTES, LEN_BYTES, DATA_STREAM_BYTES,*
*SESSION_KEY: Secure token generated at Handshake*
*SYNC_TOKEN: Secure token that needs to be present in all packets to*/*fro CAV* & *MACVCH. This token is generated after hand-shake by a secure psuedo-random generator algorithm that executes on the MACVCH* OS *(for extra security). Ensures mal-user with access to the session token still needs the psuedo-random generated token for access to data packets.*
*TYPE_BYTES: Indicates nature* of *data transfer from a pre-defined set of types available on both systems. This may include but not limited to Vision_PACKET, Control_PACKET, EmergencyStop_PACKET etc.*
*LEN_BYTES: Length* of *data in bytes to be expected*
*DATA_STREAM_BYTES: N number of bytes encoded* as *per the data requirements. The nature* of *data encoded is dictated by TYPE_BYTES*

### Connected Autonomous Vehicle Local Information Node (CAVLIN)

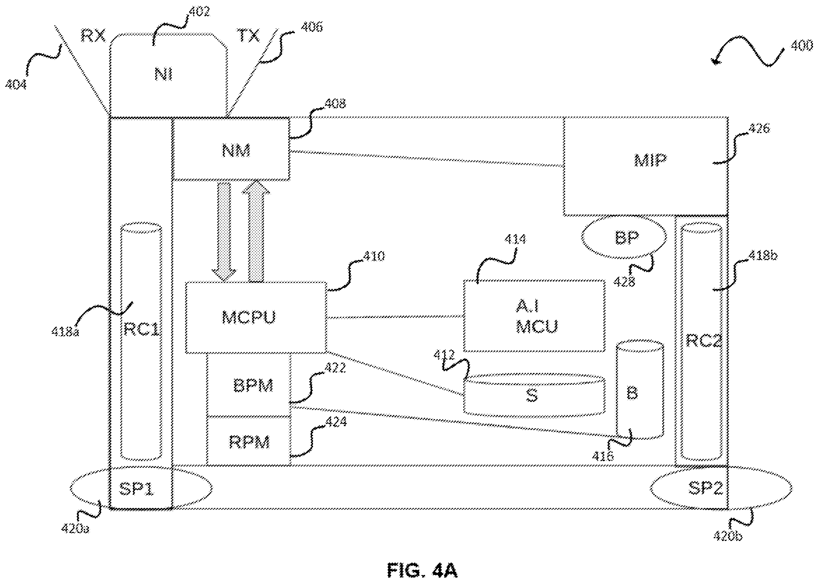

Figure 4A shows an example of the hardware of an enhanced network node 400, such as the enhanced network node 108 of Figure 1B, in a particular embodiment of the present invention. The enhanced network node 400 can be deployed in the connected vehicle nervous system 100 as a nerve in the network.

The enhanced network node 400 includes a network infrastructure unit 402 (NI), which includes antennas for the transmission and reception of packet information from/to the one or more CAVs 102, and/or other network nodes 106,108, and/or the mobile command hub 104. Preferably, the enhanced network node 400 includes a receiving antenna 404 (RX) and a transmission antenna 406 (TX). The receiving antenna 404 is configured to receive a signal from one or more CAVs, and the transmission antenna 406 is configured to transmit a signal to one or more CAVs. In other words, through the antennas in combination a feedback loop (communication link) with one or more of the CAVs is established.

The enhanced network node 400 includes a network management unit 408 (NM). The network management unit 408 is a micro-processor unit in charge of network protocols and data transfer. The network management unit 408 controls the network infrastructure unit 402. The network management unit 408 is responsible for the seamless reception and transmission of data back and forth from the one or more CAVs 102 within a real-time environment. This may include specialized data protocols for data security and integrity, which will be explained in more detail below.

The network node 400 may be configured to communicate with one or more CAVs 102 and/or the mobile command hub 104 via at least one of: line of sight communication, 4G, 5G, Wi-Fi, and RF communication. Line of sight and WiFi are preferred.

The network node 400 further includes a main computer processing unit 410 (MCPU) (first processor unit 410) and a storage unit 412 (S). The main computer processing unit 410 controls the overall functioning of the network node 400. Preferably, the storage 412 is a physical storage located on the network node 400 chipset.

In some embodiments, a database/registry for CAV types, makes, manufacturers, or the like may be stored on the storage unit 412. The network node 400 can then ensure that only registered vehicles or vehicles manufacturers are able to communicate with the network node 400 via the network infrastructure unit 402. This provides additional security for the connected vehicle nervous system 100. New makes and vehicles may only be allowed to communicate when the local network node storage unit database/registry is updated with their particular make, model number, serial number, or the like. Updating of the registry/database can be done either physically by an operator during maintenance or by a communication from another nerve in the connected vehicle nervous system 100. For example, any of the CAVs may alert each network node of an update to the registry as it passes the network node. Alternatively, in some embodiments the mobile command hub 104 can broadcast the update across the network, optionally using a relay node as described in relation to Figure 1B. Enhanced network nodes, such as the enhanced network node 108 of Figure 1B, will typically be informed directly from the mobile control hub 104 or from another enhanced network node. The smaller, simpler network nodes, such as the network nodes 106 of Figure 1A will typically be informed either by a passing CAV, or by a relay node. The database/registry is made possible through the usage of data compression techniques and embedded storage features that enable a vast registry of vehicles and related data to be stored within the network nodes.

In some embodiments, network node 400 includes a second processor unit 414. The second processor 414 is a dedicated processor configured for processing data received from the one or more CAVs 102 in communication with the network node 400, in other words, CAVs in the local vicinity. The second processor unit 414 may be a bespoke A.I/vision processor for specific driving related computer-vision functionalities. The second processor unit 414 may be an artificial intelligence microchip unit (A.I MCU). In other words, a dedicated microchip optimised for operations such as, but not limited to: matrix calculations, image processing, signal processing, low resolution A.I/vision processing. The second processor unit 414 may processes images, CAV sensor data and any other data received from CAVs in the connected vehicle nervous system 100. In some embodiments, the second processor unit 414 may be configured to perform training of a neural network operating on at least one of the one or more CAVs. Additionally or alternatively, the second processor unit 414 may perform at least one of: image classification, image segmentation, and object recognition using a trained neural network.

The network node 400 includes a power storage unit 416, such as a battery (B). It is beneficial for the network node 400 to include a self-sufficient power supply that can support the network node during isolated placements in remote locations. Preferably, the power storage unit 416 is a long-lasting battery solution.

Preferably, the power storage unit 416 can be supplied by a renewable energy means. For example, solar panels and/or renewable coils or the like can be used. In the particular embodiment of Figure 4A, two renewable coils 418a,418b (RC1,RC2) and/or two solar panels 420a,420b (SP1,SP2) are included to provide power to the power storage unit 416. To reduce size, the solar panels 420 may be micro solar panels, to form a micro renewable energy system and reduce the size of the network node.

The renewable coils 418 are thermally conductive coils. These are two coils (or material mesh) of TEG (thermoelectric generator) materials which produce electrical current through differences in ambient temperature settings. The electrical current may be used for powering/charging the power storage unit 416 (battery). The principle is to use thermoelectric material (organic or non-organic) akin to those deployed in wearable technology and other edge devices and interface them physically to two coils 418. The first coil 418a is exposed to the environment to directly absorb heat and the second coil 418b is insulated to minimize conductivity to the environment. The coils 418 are interfaced with two differently seeded thermoelectric materials (i.e. p doped and n doped to carry opposite charges). This resultant heat differential and associated micro TEG circuitry generates ambient power that recharges the system battery and maintains continuous operation of the network node. The choice of materials for the TEG includes, but is not limited to: P3HT, PANi/graphene-PEDOT:PSS/PANi/DWNT-PEDOT:PSS, tetrabutylammonium (TBA), and, PEDOT:PSS.

In general any combination or renewable energy devices may be used to provide power to the power storage unit.

Preferably, the battery is controlled by a battery power management unit 422 (BPM). Preferably, the renewable energy means, such as the renewable coils 418 and solar panels 420 or the like, are controlled by a renewable power management unit 424 (RPM). The renewable power management unit 424 manages renewable recharging of the power storage unit 416.

An optional manual interface port 426 (MIP) may be included on the network node 400, for receiving an input from an operator during testing, maintenance, configuration, or upgrades or the like. In some embodiments, the network node 400 may also include a buzzer unit 428 or alternative method for physical generation of noise from the network node 400. The buzzer unit may include a buzzer program (BP) implemented in software. The buzzer unit 428 can produce noise for functionality and testing purposes.

As mentioned previously, typically the majority of the network nodes will be simple, small, low intelligence modules, with the minority being the enhanced network node type such as that shown in Figure 4A. The smaller network nodes, such as network nodes 106a to 106f share the same components as the network node 400, except that the second processor unit 414 will typically be omitted. Moreover, the manual interface port 426 and/or the buzzer unit 428 may be omitted in the smaller network nodes 106. The smaller network nodes 106 may also include a smaller main processor unit 410, network management unit 408 and network infrastructure 402 compared to the enhanced network nodes 402, each with a lower power and/or size. In other words, the smaller network nodes 106 operate minimal specialised intelligence within their subsystems, with the remaining intelligence specifically for supplementing perceptual and safety capabilities of vehicles. Otherwise, the description of Figure 4A above is applicable to the smaller and/or lower computing/electrical power network nodes 106.

As mentioned above, the use of many smaller/lower powered network nodes 106 means large scale production is possible, and a wide area can be covered by many network nodes used in combination. Each of the network nodes can act as a localised information node for passing connected vehicles in the vicinity of the network node. The use of the network nodes can substantially increase the area of coverage of a mobile command hub 104, compared to the mobile command hub being used to control the CAVs in isolation.

Both the smaller and enhanced network nodes 106,108 may communicate with the rest of the system 100 using line of sight communication, for example, and in some embodiments may only communicate with vehicles or vehicle manufacturers included on the stored database/registry. In this way, the system 100 forms a private network, which can advantageously be kept separate from any public network such as a public telecommunication network or the internet, which enhances the security of the connected vehicle nervous system 100. In other words, in some embodiments there is no global connectivity for maximal cyber security.

Advantageously, in an enhanced network node, such as network node 108 of Figure 1B, the second processor 414 can perform the A.I processing such as training a neural network, or image classification, image segmentation, and object recognition or the like, using a trained neural network. The second processor 414 means the enhanced network node 108 can perform A.I processing without having to communicate all the way back to the processor unit 202 of the mobile command hub 104. This means that passing CAVs can offload A.I processing work to the enhanced network node 108 as well as the mobile command hub 104. Moreover, an enhanced network node 108 can act a relay node as described above.

### Network management unit 408 data packet format

The primary mode of data-transfer is between a CAVLIN (network node 106,108) & CAV, although CALVIN & MACVCH (mobile command hub 104) connections may also occur. The secure transfer algorithm between CAVLIN & external vehicles (CAVs) is akin/similar to that provided for the MACVCH & CAV transfer above (in the section titled "Network communication unit 206").

Outlined below is the description and format of the custom data-packets that transfer between CAVLIN and external vehicle (CAV). There two higher-level packet types Handshake Packet and Data Packet
**Handshake Packet:** EXT_REG_TOKEN, CAVLIN_REG_TOKEN, SESSION_KEY, PERIODIC_PASSWORD
**EXT_REG_TOKEN:** Registry token (compressed as > 50 ASCI CHARACTER, with each CHARACTER encoded as 1 BYTE) indicating specific make, model and other relevant technical information of CAV or MACVCH
**CAVLIN_REG_TOKEN:** Registry token (compressed & encrypted as > 50 ASCI CHARACTER, with each CHARACTER encoded as 1 BYTE) indicating specific make, model and other relevant technical information of CAVLIN.
**SESSION_KEY:** UNIQUE REAL-TIME GENERATED SESSION KEY (> 15 ASCI CHARACTER) WHICH NEEDS TO BE PRESENT IN EVERY SUBSEQUENT DATA-TRANSFER PACKET FROM CAV & EXTERN
**PERIODIC_PASSWORD:** A periodic password of any length encoding which is available from a centralised registry to both CAVLIN & EXTERN and needs to match for hand-shake to be complete.
**Data Packet:** SESSION_KEY, SYNC_TOKEN, TYPE_BYTES, LEN_BYTES, DATA_STREAM_BYTES
**SESSION_KEY:** Secure token generated at Handshake
**SYNC_TOKEN:** Secure token that needs to be present in all packets to/fro CAV & CAVLIN. This token is generated after hand-shake by a secure psuedo-random generator algorithm that executes on the CAVLIN OS (for extra security). Ensures mal-user with access to the session token still needs the psuedo-random generated token for access to data packets.
**TYPE_BYTES:** Indicates nature of data transfer from a pre-defined set of types available on both systems. This may include but not limited to Vision_PACKET, Control_PACKET, EmergencyStop_PACKET etc.
**LEN_BYTES:** Length of data in bytes to be expected
**DATA_STREAM_BYTES:** N number of bytes encoded as per the data requirements. The nature of data encoded is dictated by TYPE_BYTES

### Functional/Data Operational Flow of CAVLIN

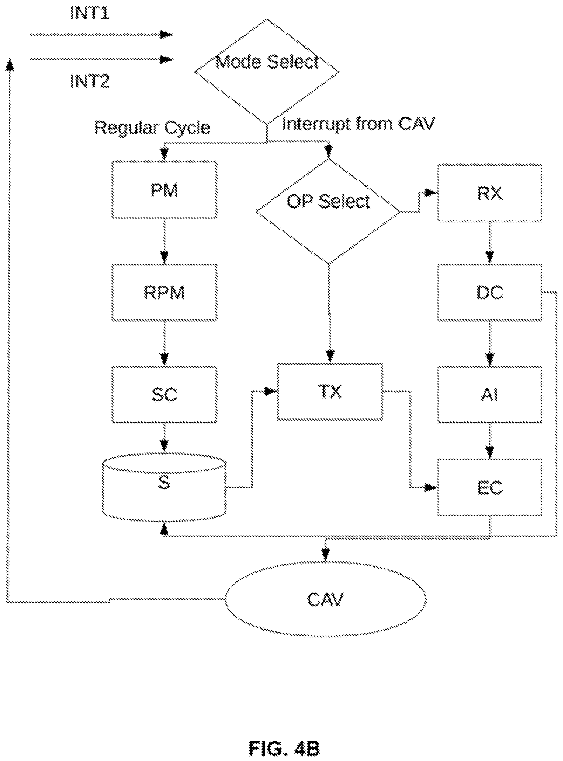

Each network node 106,108 needs to maximise power performance and battery usage, as it is typically deployed remotely and each network node may be isolated in some cases. Figure 4B shows an operation flow chat for the network node 400 of Figure 4A. Typically the network node 400, it operates within a mode in which it stays within a dormant state, completing routine system checks until prompted by an identified signal, which will trigger the operational flow as shown in Figure 4B.

The functions in Figure 4B are explained below:
**INT 1:** Interrupt 1, **INT2:** Interrupt 2: Signify interrupt signals, which in the present invention are CAVs within proximity of a CAVLIN network node starting communication with the network node. These can force the network node out of the dormant state.
Select: Select to receive or transmit.
**PM:** Power Management (equivalent to the battery power management unit BPM 422 described above). Includes micro-circuitry & logic to monitor battery state and for interfacing with the RPM.
**RPM:** Renewable Power Management. Includes renewable power management logic to monitor transfer of power from the solar panels 420 and renewable coils 418.
**SC:** Data Storage and Management Algorithm to ensure memory buffers are maintained and redundant information is deleted.
**S:** Storage on system for storing CAV registry, Neural Network/A.I weights and other configurable parameters.
**TX:** Transmission Antenna.
RX: Receiver Antenna.
**AI:** A.I / Vision mini signal processor optimised for autonomous driving functional tasks for supplementing the CAV perception and understanding of the local environment.
**DC:** Decryptor
**EC:** Encryptor

### Connected Autonomous Vehicles (CAVs)

As discussed above, any type of connected vehicle may be used in the system 100, including fully autonomous vehicles, semi-autonomous vehicles, and manually controlled road vehicles that have provisions of network connectivity. As well as or alternatively to the control stations 208 described above, the connected vehicle may include a controls for an operator sat in the vehicle, which can overrule any autonomous functionality of the vehicle. In other words, the control stations may be additionally/alternatively located within the CAVs.

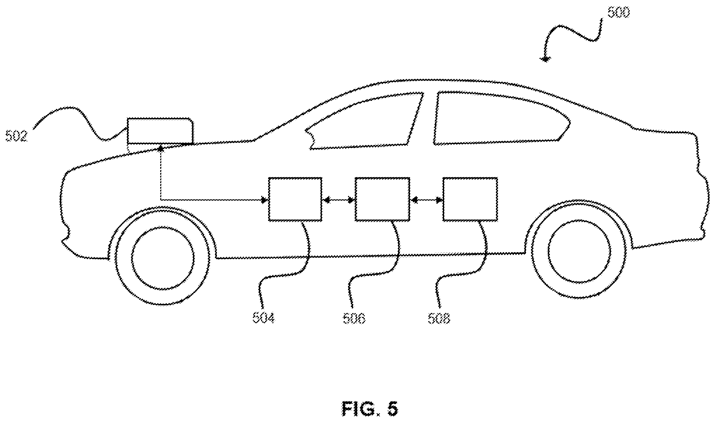

An example of an autonomous connected vehicle 500 that can be used as a CAV in the connected vehicle nervous system 100 will now be described in relation to Figure 5. The autonomous connected vehicle 500 may be controlled and monitored by the mobile command hub 104, 200. The vehicle 500 includes one or more sensors 502 fixed to the vehicle, an apparatus 504, a controller computer 506 and a vehicle component unit 508. The apparatus 504 includes at least a processor and memory and is configured to perform a specific task using the data received from the sensor 502. The specific task may be image classification, image segmentation, and object recognition or the like, using a trained neural network. Once an outcome is calculated by the apparatus 504, it is sent to the controller computer 506. A non-limiting example of an outcome output by the apparatus 504 is identifying a section of a captured image as an obstacle, or identifying a particular region as a road surface, or the like. The controller computer 506 then uses the outcome to control the vehicle 500, by sending instructions to the vehicle component unit 508. The vehicle component unit 508 is a physical component or system of the vehicle 500 that is responsible for movement of the vehicle. The vehicle component unit 508 may thus be the engine control unit, a braking unit, a steering unit or the like. The controller computer 506 includes at least a processor, memory and communication components for communicating with the apparatus 504 and the vehicle component unit 508. The controller computer 506 is preferably configured to autonomously or semi-autonomously control movement and thus driving of the vehicle 500. The apparatus 504 is preferably a SoC as discussed above, and may be one of several individual apparatuses. Each of these apparatuses may communicate with each other and the controller computer 506. Sensor data is fed from the sensor 502 into the apparatus 504, where it is manipulated using trained neural networks, as previously mentioned. The outcome produced by the neural network in the apparatus 504 is then sent to the controller computer 506 where it is used to control one or more vehicle component units 508.

The output of the neural network in performing a specific task may be shared from the apparatus 504 to other computers or vehicles nearby, either directly or via the mobile command hub 104 or one or more network nodes 106,108. The output of the neural network in performing a specific task may also be shared with the mobile command hub 104 or one or more network nodes 106,108 themselves. Moreover, any sensor data recorded by the vehicle may similarly be communicated to nearby network nodes 106 or to the mobile command hub 104.

It is to be understood that any conventional computing components may be used to implement the components shown in Figure 5. However, it is preferred that the apparatus 504 is a SoC due to the speed and efficiency benefits of using a SoC design in comparison to traditional computers. Advancement in modern computing has allowed all the crucial internals that allow a computer to run to be installed on a single chip. These would include processors, input/outputs, memory controllers, storage and the like. In traditional computing these would have been managed by different components which would have to have been manually installed on a single motherboard connecting everything together. An SoC, by contrast, integrates multiple or all of these functions onto a single small board which is the same size or often smaller than a conventional CPU. Where traditionally, a computer requires the operating system first to boot up, and drivers to load, by contrast, the advantage of an SoC is that task specific computer programs can be written specifically for the SoC thus saving on loading time and speed. Each of the specific tasks of image classification, object detection and image segmentation can be performed by the SoC locally in the vehicle. Alternatively a separate SoC can be used for each specific task.

The above described advantages of SoCs can also be utilized in the mobile command hub 104 and network nodes 106,108 also. The processors of the mobile command hub 104 and network nodes 106 (processor unit 202, back-up processor unit 218, main processor unit 410, and second processor unit 414) may all be implemented as SoCs.

Returning to Figure 5, it is not necessary that the camera/sensor 502 be fitted to the vehicle 500, although it typically would be. Instead, the camera/sensor 502 may be physically separate from the vehicle 500, such that the camera/sensor 502 is not fitted to a structure or is fitted at an external location. The external location may be, for example, at a junction on a road, on a traffic sign or on a lamppost. The external sensor may be located in combination with a network node, such as network node 106b of Figure 1A. The camera/sensor 502 may communicate with the vehicle 500 and thus the apparatus 504 via the network node 106b. In some embodiments, alternatively to the sensors (either on the vehicle or external to the vehicle) or additionally to the sensors, a handshake type communication between the vehicle and a nearby network node 106 can allow the vehicle to locate itself.

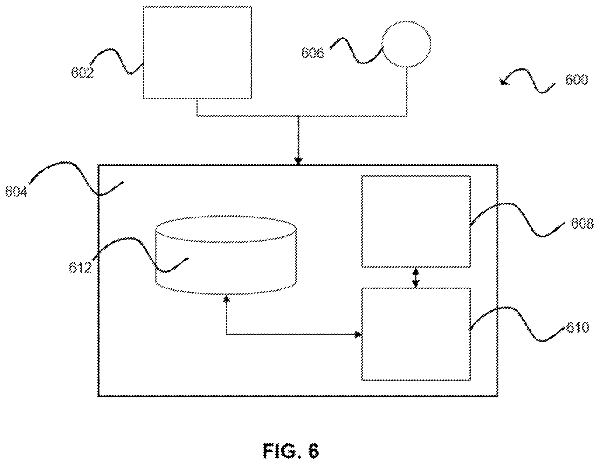

An autonomous driving system (ADS) 600 that can be used with the connected autonomous vehicle of Figure 5 will now be described in relation to Figure 6. The ADS 600 includes a training software module 602, and a computer device 604 that is configured to run a perception software stack 608. The computer device 604 can be used as the apparatus 504 in the vehicle 500 of Figure 5.

The training software module 602 is configured to provide to the computer device 604 a set of trained weights for a low resolution recurrent active vision neural network (LRRAVNN) that forms part of the perception software stack 608. The training software module 602 generates the trained weights, for performing a specific task with the neural network, using an artificial evolution algorithm. The specific task that the weights are trained for includes one or more of image classification, image segmentation, and object detection. The specific tasks are thus computer vision tasks, the results of which are used to inform control of an autonomous vehicle. Once the process of training the weights for one or more of the specific tasks is completed by the artificial evolution algorithm, the trained weights are uploaded to the computer device 604 via a data transfer for use in the neural network in the perception software stack 608.

The computer device 604 includes the perception software stack 608 or communicates with a computer readable medium having the perception software stack 608 stored thereon. The computer device includes a processor 610 and a memory 612. The perception software stack 608 is preferably implemented as computer-readable instructions stored on the memory 612 and executable by the processor 610. The computer device 604 is configured to be fitted into vehicle 500 as the apparatus 504, and includes an input for connecting to a sensor 606 (sensor 502 of Figure 5) and an output for outputting the results of the specific task to inform control of the vehicle. The computer device may be an integrated circuit. The final weights trained by the training software module 602 are stored on the memory 612 when they are provided to the computer device 604. The memory 612 is also configured to store a configuration file, whereby the configuration file includes the operating parameters of the perception software stack 608. The operating parameters of the perception software stack 608 are different for each specific task. As such, the configuration file stored in the memory 612 is different depending on which specific task is intended to be performed by the computer device 604. The sensor 502,606 is configured to provide to the computer device 504,604 sensor data describing the environment of the sensor. The sensor may be a camera that produces a visual image. However, the sensor can also be infrared sensor, LIDAR sensor or the like, attached to the vehicle 500 to which the computer device 604 is fitted. The sensor 606 is configured to send the sensor data to the computer device 604 regularly as is required by an autonomous driving system.

The sensor data provided to the computer device 604 from the sensor 606 is manipulated by the perception software stack 608. The perception software stack 608 includes a plurality of layers, including a network layer comprising the neural network. When sensor data is provided to the computer device 604, the processor 610 runs the perception software stack 608 on the sensor data based on the operating parameters in configuration file and the trained weights stored in the memory 612. The sensor data is passed through each layer of the perception software stack 608 in order, to obtain a result for the specific task being performed by the computer device 604. Once a result for the specific task is obtained, the computer device 604, using the processor 610, is configured to communicate with systems in the vehicle to aid control of the vehicle based on the result of the specific task.

A more detailed discussion of the vehicle 500 and ADS 600 of Figures 5 and 6 is included in UK patent applications GB2015125.4, GB2015128.8, and GB2015130.4.

## Claims

1. A mobile command hub (104,200) for controlling one or more connected road vehicles (102), the mobile command hub comprising:
a processor unit (202) and a data storage unit (204);
a network communication unit (206) for communicating with the one or more connected road vehicles and/or one or more network nodes (106,108,400); and
one or more control stations (208a,208b) configured to remotely control the one or more connected road vehicles based on commands input by an operator;
wherein the processor unit (202) is configured to perform training of a neural network operating on at least one of the one or more connected road vehicles, said neural network configured to perform at least one of image classification, image segmentation, or object recognition based on sensor data recorded by the at least one connected road vehicle.

2. The mobile command hub (104,200) of claim 1, wherein the control of the one or more connected road vehicles (102) by the one or more control stations (208a,208b) includes control of at least one of the following located on the one or more connected road vehicles: sensors, cameras, steering, brakes, motors, indicators, headlights, and engine control units.

3. The mobile command hub (104,200) of claims 1 or 2, wherein the remote control of the one or more connected road vehicles (102) by the one or more control stations (208a,208b) occurs in real-time.

4. The mobile command hub (104,200) of any preceding claim, further comprising one or more physical connection interfaces (212) for coupling to the one or more connected road vehicles (102).

5. The mobile command hub (104,200) of claim 4, wherein each of the one or more physical connection interfaces (212) enables secure data-transfer between the processor unit (202) and a coupled one of the one or more connected road vehicles (102), and/or power charging of the coupled one of the one or more connected vehicles.

6. The mobile command hub (104,200) of any preceding claim, wherein the network communication unit (206) is configured to communicate with the one or more connected road vehicles (102) and/or network nodes (106,108,400) via at least one of: line of sight communication, Wi-Fi, 4G, 5G, and RF communication.

7. A connected vehicle nervous system (100) comprising:
a mobile command hub (104,200) according to any of claims 1 to 6;
one or more network nodes (106,108,400) for monitoring one or more connected road vehicles (102); and
one or more connected road vehicles (102), the one or more connected road vehicles being in communication with the mobile command hub (104,200) and/or at least one of the one or more network nodes (106,108);
wherein each of the one or more network nodes comprises:
a first processor unit (410) and a data storage unit (412); and
a network infrastructure unit (402) for communicating with the one or more connected road vehicles (102); wherein
the data storage unit (412) is configured to store data received by the network infrastructure unit (402); and
the network infrastructure unit (402) is configured to transmit data stored in the data storage unit (412) to the one or more connected road vehicles (102).

8. The system (100) of claim 7, comprising a plurality of the network nodes (106,108,400), wherein a first subset of the network nodes has a smaller size and/or power than a second subset of the network nodes.

## Patentansprüche

1. Mobile Befehlszentrale (104, 200) zur Steuerung eines oder mehrerer verbundener Straßenfahrzeuge (102), wobei die mobile Befehlszentrale umfasst:
eine Verarbeitungseinheit (202) und eine Datenspeichereinheit (204);
eine Netzwerkkommunikationseinheit (206) zum Kommunizieren mit dem einen oder den mehreren verbundenen Straßenfahrzeugen und/oder einem oder mehreren Netzwerkknoten (106, 108, 400); und
eine oder mehrere Steuerstationen (208a, 208b), die so konfiguriert sind, dass sie das eine oder die mehreren verbundenen Straßenfahrzeuge, basierend auf von einem Bediener eingegebenen Befehlen, fernsteuern;
wobei die Verarbeitungseinheit (202) so konfiguriert ist, dass sie das Training eines neuronalen Netzwerks durchführt, das auf mindestens einem des einen oder der mehreren verbundenen Straßenfahrzeuge betrieben wird, wobei das neuronale Netzwerk so konfiguriert ist, dass es, basierend auf von dem mindestens einen verbundenen Straßenfahrzeug aufgezeichneten Sensordaten, mindestens eines aus Bildklassifikation, Bildsegmentierung oder Objekterkennung durchführt.

2. Mobile Befehlszentrale (104, 200) nach Anspruch 1, wobei die Steuerung des einen oder der mehreren verbundenen Straßenfahrzeuge (102) durch die eine oder die mehreren Steuerstationen (208a, 208b) die Steuerung von mindestens einem der folgenden Elemente einschließt, die sich auf dem einen oder den mehreren verbundenen Straßenfahrzeugen befinden: Sensoren, Kameras, Lenkung, Bremsen, Motoren, Blinker, Scheinwerfer und Motorsteuereinheiten.

3. Mobile Befehlszentrale (104, 200) nach Anspruch 1 oder 2, wobei die Fernsteuerung des einen oder der mehreren verbundenen Straßenfahrzeuge (102) durch die eine oder die mehreren Steuerstationen (208a, 208b) in Echtzeit erfolgt.

4. Mobile Befehlszentrale (104, 200) nach einem vorstehenden Anspruch, weiter umfassend eine oder mehrere physische Verbindungsschnittstellen (212) zum Koppeln mit dem einen oder den mehreren verbundenen Straßenfahrzeugen (102).

5. Mobile Befehlszentrale (104, 200) nach Anspruch 4, wobei jede der einen oder mehreren physischen Verbindungsschnittstellen (212) eine sichere Datenübertragung zwischen der Verarbeitungseinheit (202) und einem gekoppelten der einen oder mehreren verbundenen Straßenfahrzeuge (102) ermöglicht und/oder das Aufladen des gekoppelten der einen oder mehreren verbundenen Fahrzeuge ermöglicht.

6. Mobile Befehlszentrale (104, 200) nach einem vorstehenden Anspruch, wobei die Netzwerkkommunikationseinheit (206) so konfiguriert ist, dass sie mit dem einen oder den mehreren verbundenen Straßenfahrzeugen (102) und/oder Netzwerkknoten (106, 108, 400) über mindestens eines der Folgenden kommuniziert: Sichtverbindungskommunikation, Wi-Fi, 4G, 5G und HF-Kommunikation.

7. Verbundenes Fahrzeugnervensystem (100), umfassend:
eine mobile Befehlszentrale (104, 200) nach einem der Ansprüche 1 bis 6;
einen oder mehrere Netzwerkknoten (106, 108, 400) zum Überwachen eines oder mehrerer verbundener Straßenfahrzeuge (102); und
ein oder mehrere verbundene Straßenfahrzeuge (102), wobei das eine oder die mehreren verbundenen Straßenfahrzeuge in Kommunikation mit der mobilen Befehlszentrale (104, 200) und/oder mindestens einem des einen oder der mehreren Netzwerkknoten (106, 108) stehen;
wobei jeder des einen oder der mehreren Netzwerkknoten Folgendes umfasst:
eine erste Verarbeitungseinheit (410) und eine Datenspeichereinheit (412); und
eine Netzwerkinfrastruktureinheit (402) zum Kommunizieren mit den einen oder mehreren verbundenen Straßenfahrzeugen (102); wobei
die Datenspeichereinheit (412) so konfiguriert ist, dass sie von der Netzwerkinfrastruktureinheit (402) empfangene Daten speichert; und
die Netzwerkinfrastruktureinheit (402) so konfiguriert ist, dass sie in der Datenspeichereinheit (412) gespeicherte Daten an das eine oder die mehreren verbundenen Straßenfahrzeuge (102) überträgt.

8. System (100) nach Anspruch 7, umfassend eine Vielzahl der Netzwerkknoten (106, 108, 400), wobei eine erste Untergruppe der Netzwerkknoten eine geringere Größe und/oder Leistung aufweist als eine zweite Untergruppe der Netzwerkknoten.

## Revendications

1. Concentrateur (104, 200) de commande mobile pour commander un ou plusieurs véhicules routiers connectés (102), le concentrateur de commande mobile comprenant :
une unité de processeur (202) et une unité de stockage (204) de données ;
une unité de communication réseau (206) pour communiquer avec les un ou plusieurs véhicules routiers connectés et/ou un ou plusieurs nœuds réseau (106, 108, 400) ; et
une ou plusieurs stations de commande (208a, 208b) configurées pour commander à distance les un ou plusieurs véhicules routiers connectés sur la base de commandes entrées par un opérateur ;
dans lequel l'unité de processeur (202) est configurée pour réaliser un entraînement d'un réseau de neurones fonctionnant sur au moins l'un des un ou plusieurs véhicules routiers connectés, ledit réseau de neurones étant configuré pour réaliser au moins l'une parmi la classification d'image, la segmentation d'image ou la reconnaissance d'objet sur la base de données de capteur enregistrées par l'au moins un véhicule routier connecté.

2. Concentrateur (104, 200) de commande mobile selon la revendication 1, dans lequel la commande des un ou plusieurs véhicules routiers connectés (102) par les une ou plusieurs stations de commande (208a, 208b) inclut la commande d'au moins l'un des éléments suivants situés sur les un ou plusieurs véhicules routiers connectés : des capteurs, des caméras, une direction, des freins, des moteurs, des clignotants, des phares et des unités de commande de moteur.

3. Concentrateur (104, 200) de commande mobile selon la revendication 1 ou la revendication 2, dans lequel la commande à distance des un ou plusieurs véhicules routiers connectés (102) par les une ou plusieurs stations de commande (208a,208b) a lieu en temps réel.

4. Concentrateur (104, 200) de commande mobile selon une quelconque revendication précédente, comprenant en outre une ou plusieurs interfaces (212) de connexion physique pour le couplage aux un ou plusieurs véhicules routiers connectés (102).

5. Concentrateur (104, 200) de commande mobile selon la revendication 4, dans lequel chacune des une ou plusieurs interfaces (212) de connexion physique permet un transfert de données sécurisé entre l'unité de processeur (202) et un couplé des un ou plusieurs véhicules routiers connectés (102), et/ou une charge électrique de l'un couplé des un ou plusieurs véhicules connectés.

6. Concentrateur (104, 200) de commande mobile selon une quelconque revendication précédente, dans lequel l'unité de communication réseau (206) est configurée pour communiquer avec les un ou plusieurs véhicules routiers connectés (102) et/ou nœuds réseau (106, 108, 400) via au moins l'un parmi : une communication en ligne de visée, un Wi-Fi, une 4G, une 5G et une communication RF.

7. Système (100) nerveux de véhicule connecté comprenant :
un concentrateur (104, 200) de commande mobile selon l'une quelconque des revendications 1 à 6,
un ou plusieurs nœuds de réseau (106, 108, 400) pour surveiller un ou plusieurs véhicules routiers connectés (102) ; et
un ou plusieurs véhicules routiers connectés (102), les un ou plusieurs véhicules routiers connectés étant en communication avec le concentrateur (104, 200) de commande mobile et/ou au moins un des un ou plusieurs nœuds de réseau (106, 108) ;
dans lequel chacun des un ou plusieurs nœuds de réseau comprend :
une première unité de processeur (410) et une unité de stockage (412) de données ; et
une unité d'infrastructure réseau (402) pour communiquer avec les un ou plusieurs véhicules routiers connectés (102) ; dans lequel l'unité de stockage (412) de données est configurée pour stocker des données reçues par l'unité d'infrastructure réseau (402) ; et
l'unité d'infrastructure réseau (402) est configurée pour transmettre des données stockées dans l'unité de stockage (412) de données aux un ou plusieurs véhicules routiers connectés (102).

8. Système (100) selon la revendication 7, comprenant une pluralité des nœuds de réseau (106, 108, 400), dans lequel un premier sous-ensemble des nœuds de réseau présente une taille et/ou une puissance plus petite qu'un deuxième sous-ensemble des nœuds de réseau.
